Europäisches Patentamt

European Patent Office

Office européen des brevets

(11) Veröffentlichungsnummer: **0 083 947**
**B1**

# EUROPÄISCHE PATENTSCHRIFT

㊺ Veroffentlichungstag der Patentschrift:
**08.05.85**

(21) Anmeldenummer: **83100182.1**

(22) Anmeldetag: **11.01.83**

(51) Int. Cl.⁴: **E 05 F 15/16, G 05 B 19/405**

(54) Verfahren zur Überwachung eines angetrieben Bewegbaren Tores oder dergleichen.

(30) Priorität: **11.01.82 DE 3200511**

㊸ Veroffentlichungstag der Anmeldung:
**20.07.83 Patentblatt 83/29**

(45) Bekanntmachung des Hinweises auf die Patenterteilung:
**08.05.85 Patentblatt 85/19**

(84) Benannte Vertragsstaaten:
**AT BE CH DE FR GB IT LI NL**

(56) Entgegenhaltungen:
**WO - A - 81/01831**
**GB - A - 1 098 617**
**GB - A - 2 010 957**
**GB - A - 2 043 958**

(73) Patentinhaber: **HÖRMANN KG ANTRIEBS- und STEUERUNGSTECHNIK, Remser Brook 11 (Ortsteil Marienfeld), D-4834 Harsewinkel 2 (DE)**

(72) Erfinder: **Hörmann, Michael, Dipl.-Ing., Upheider Weg 94, D-4803 Steinhagen (DE)**

(74) Vertreter: **Flügel, Otto, Dipl.-Ing. et al, Dipl.-Ing. Otto Flügel Dipl.-Ing. Manfred Säger Patentanwälte Cosimastrasse 81 Postfach 810 540, D-8000 München 81 (DE)**

# Beschreibung

Die Erfindung bezieht sich auf ein Verfahren zur Überwachung der Bewegung eines Torblattes und eine Anlage zur Durchführung des Verfahrens.

Angetriebene Türen und Tore müssen daraufhin überwacht werden, daß sie im Zuge ihrer Überführungsbewegung zwischen der Offenstellung und der Schließstellung keine Beschädigungen an Gegenständen oder Verletzungen an Personen hervorrufen, die unbeabsichtigt während der Bewegung in die Bewegungsbahn des Torblattes gelangen oder sich als Hindernis bereits bei Auslösen der Torblattbewegung dort befinden. Man hat bereits verschiedene Einrichtungen entwickelt, um diesem Gefahrenschutz Rechnung zu tragen. So gibt es im Bereich der auf das eventuelle Hindernis auftreffenden Torblattkante bzw. aufeinander zu bewegenden Kanten von Türblättern und dergleichen unter nachgiebigen Wulsten angeordnete Fühler, insbesondere in Form elektrischer Kontakte, die bei Auftreffen des Wulstes auf ein Hindernis den Antrieb abschalten oder dessen Bewegungsrichtung umkehren. Solche an sich empfindlichen Fühler sind überall anbringbar und nicht wirksam, wenn ein Hindernis, beispielsweise ein Wagen, außerhalb der mit dem Fühler versehenen Kante in das sich schließende Torblatt hineinfährt.

Weiterhin hat man eine durch ein Hindernis verursachte Verzögerung des Torblattes bereits durch Überwachen des Kraftübertragungsweges zwischen Antrieb und Torblatt erfaßt, beispielsweise bei einem Kettenantrieb durch Abtasten der gegen Federkraft erfolgenden Verschwenkung des Kettenantriebes, wenn dieser aufgrund der verzögerten Torblattbewegung der Antriebskraft nicht mehr im normalen Umfange folgt.

In dieser letzteren Art gibt es eine Vielzahl von Ausführungsbeispielen im Stande der Technik; siehe z. B. GB-A-2 043 958, dort insbesondere Fig. 3.

Die letztgenannten Überwachungseinrichtungen beruhen sämtlich darauf, daß man eine bestimmte, für die normale, hindernisfreie Bewegung des Torblattes erforderliche Kraft daraufhin überwacht, ob sie einen bestimmten, vorgegebenen Differenzwert überschreitet. Diese Kraft ist verständlicherweise jeweils die höchste, die im Zuge der Torblattbewegung auftritt.

Die für die Bewegung eines Torblattes erforderliche Kraft ist jedoch über die Überführungsstrecke hinweg gesehen nicht konstant. Diese Inkonstanz kann durch die Konstruktion des Tores bedingt sein, sie tritt spätestens auf, wenn man Windeinflüsse und andere örtliche Betriebsgegebenheiten mit berücksichtigt. Bei sehr vielen Toren treten jedenfalls durch die Verlagerung des Torblattes unterschiedliche Gewichtsverhältnisse und Reibungseinflüsse auf, die — für den Fall von Torblättern, die durch Federn kompensiert sind, insbesondere bei über Kopf bewegbaren Torblättern — nur unter großem Aufwand und kaum unter praktischen Betriebsverhältnissen, spätestens unter Berücksichtigung sich einstellenden Verschleißes, unterschiedlichen Temperaturverhältnissen wie Sommerbetrieb und Winterbetrieb, leichtere Beschädigung bei industriellem Einsatz, vollständig aufgefangen werden können.

Man erhält also bei den hier betrachteten Toren eine von der Übertragungsstrecke abhängige Antriebskraftgröße, deren Maximum bislang als Kriterium für die oben stehenden Unfallschutzeinrichtungen ausgewertet wurde.

Der Erfindung liegt die Aufgabe zugrunde, Türen, und Tore der in Frage stehenden Art in erheblich feinfühligerer Weise auf vom Normalbetrieb abweichende Hindernisse bei der Bewegung des Torblattes zu überwachen.

Zur Lösung dieser Aufgabe wird erfindungsgemäß vorgeschlagen, nach Anspruch 1 zu verfahren. Ein solches Verfahren kann durch eine Anlage gemäß Anspruch 13 erfindungsgemäß durchgeführt werden.

Der Grundgedanke der Erfindung besteht darin, sich die über die Überführungsstrecke des Torblattes hinweg gesehen unterschiedliche Bewegungscharakteristik des Torblattes zunutze zu machen und für die Auslösung eines Abschalt- bzw. Umschaltsignals für den Antrieb nicht nur den im Zuge der Bewegung höchsten auftretenden Kraftbedarf bzw. Widerstand als Maßstab zu nehmen, sondern den jeweilig in Abhängigkeit von der zurückgelegten Strecke tatsächlich auftretenden Widerstand mit demjenigen zu vergleichen, der für den Normalbetrieb, also ohne Auftreten eines Hindernisses an eben dieser Streckenstelle erforderlich ist. Natürlich sind auch im Zuge der erfindungsgemäßen Lösung Differenzwerte vorzugeben, um die der tatsächlich gemessene Signalwert von dem den hindernisfreien Bewegungsablauf wiedergebenden Funktionswert abweichen muß, bevor ein Abschaltsignal ausgelöst wird. Auf diese Weise erreicht man also, daß ein Abschaltsignal außerhalb der Stelle der Bewegungsstrecke, an welcher der höchste Widerstand bzw. der höchste Kraftbedarf für den Normalbetrieb auftritt, entsprechend schneller erfolgt, weil dort die für den Normalbetrieb geltenden Funktionswerte niedriger liegen. Insgesamt wird daher die Überwachung empfindlicher, und außerhalb der Stelle des höchsten Kraftbedarfes wird daher die auf das eventuelle Hindernis ausgeübte Einwirkung durch das Torblatt geringer gehalten.

Der vorzugebende Differenzwert, um den der Signalwert von dem Funktionswert abweichen muß, um den Hindernisfall zu signalisieren, ist zum einen von äußeren Einwirkungen wie Windeinflüssen, geringfügige Vereisungen und dergleichen abhängig, zum anderen berücksichtigt er geringfügigere Änderungen im Ablaufwiderstand. Der Differenzwert kann grundsätzlich über die Überführungsstrecke hinweg unter-

schiedlich bemessen sein, beispielsweise zur Kompensierung der je nach erreichter Bewegungsstrecke unterschiedlichen Windbeeinträchtigung. Technisch einfacher gestaltet sich ein fester Differenzwert über den gesamten Bewegungsablauf hinweg.

Grundsätzlich können die Funktion als Kriterium für den Normalbetrieb einerseits und das Signal als Kriterium für den tatsächlichen, zu überwachenden Betrieb andererseits von unterschiedlichen physikalischen Betriebsgrößen der Torbewegung abgeleitet sein, vorzugsweise wird man aber für beide Werte dieselben physikalischen Ausgangsgrößen auswerten.

Es ist weiterhin grundsätzlich möglich, die Funktion für den Normalbetrieb vom Hersteller je nach Tortyp vorzugeben, in bevorzugter Ausführung wird man aber diese Funktion erst nach Installation des Tores am Einsatzort aufnehmen. Damit erreicht man die beste Wiedergabe der für das eingebaute Tor tatsächlich auftretenden Normalbetriebsverhältnisse, und zwar nicht nur unter Berücksichtigung der mechanischen Verhältnisse für dieses konkrete Tor nach Installation, sondern darüber hinaus bereits die Berücksichtigung herrschender Umwelteinflüsse. Da sich die Betriebsverhältnisse durch Verschleiß etc. im Laufe der Zeit ändern, kann man — bevor Reparaturen angezeigt erscheinen — diesen Einflüssen durch Neuaufnahme der Funktion in entsprechenden Zeitintervallen Rechnung tragen.

Die streckenabhängige Ermittlung der Funktion bzw. — im zu überwachenden Betrieb — des Signals kann beispielsweise durch entsprechende streckenabhängige Abfrage des jeweils auftretenden Antriebskraftbedarfs erfolgen. Hierbei sind grundsätzlich auch Zugkraftermittlungen gemeint, insbesondere aber wird die Ermittlung des Drehmomentes bevorzugt. Eine besondere Art der Drehmomentermittlung besteht in bevorzugter Ausführung darin, den drehmomentabhängig zwischen zwei elastisch miteinander verkuppelten, im Zuge des Antriebskraftweges hintereinander geschalteten Drehelementen auftretenden Verdrehwinkel abzutasten.

Es läßt sich auch die dem Antriebsmotor zugeführte Energie überwachen, die von dem jeweils zu überwindenden Widerstand abhängig ist, beispielsweise die elektrische Leistungsaufnahme eines elektrischen Antriebsmotors.

Das Vorgehen zur Durchführung des Verfahrens im einzelnen läßt mehrere Möglichkeiten offen. Eine erste bevorzugte Ausführungsform besteht darin, bei der streckenabhängigen Signalwertermittlung im Zuge des überwachten Bewegungsvorganges einen die Funktion gespeichert enthaltenden Träger in Abhängigkeit von dem tatsächlich auftretenden, überwachten Bewegungsvorgang streckenabschnittsweise übereinstimmend zu steuern. Es wird also für jeden erreichten Bewegungsabschnitt der zugehörige Funktionswert der Antriebskraft, des Drehmomentes oder dergleichen für den Vergleich zur Verfügung gestellt.

Ausgehend von der Vorstellung, daß eine über die Überführungsstrecke hinweg unterschiedliche Bewegungscharakteristik auch dazu führt, daß die Bewegungsgeschwindigkeit entsprechend differiert, läßt sich auch derart vorgehen, daß man die Geschwindigkeiten des Torblattes für den hindernisfreien Normalablauf einerseits und den jeweiligen tatsächlich auftretenden überwachten Ablauf andererseits miteinder vergleicht. Dies kann man erreichen, indem man einen die Funktion gespeichert enthaltenden Träger zu Beginn der überwachten Bewegung startet, dann aber unabhängig von der tatsächlichen Torbewegung nach Maßgabe des hindernisfreien Normalbetriebes weiterlaufen läßt und den jeweils erreichten Funktionswert mit dem den tatsächlichen Ablauf wiedergebenden zur selben Zeit erreichten Signalwert vergleicht. Weicht der Signalwert dabei über eine bestimmte Differenz hinweg vom Funktionswert ab, so kann dies als Aussage einer zu geringen Geschwindigkeit und damit des Vorliegens eines Hindernisses ausgewertet werden. In einfachster Weise lassen sich auf den Träger, der ja über eine bestimmte vorgegebene Zeit hinweg die Überführungsstrecke simmulierend bewegt wird, Zeitmarken in Form von Impulsen aufbringen. Bleibt der Signalwert in seiner Impulszahl pro erreichter Zeit hinter der Impulszahl der Funktion zurück, ist dies das Ab- bzw. Umschaltkriterium.

Insbesondere bei größerem Impulsabstand kann man auch diesen Abstand bzw. die streckenspezifische Impulsfrequenz zur Ableitung des Abschalt- bzw. Umschaltsignals heranziehen.

Es ist weiterhin grundsätzlich möglich, die Erfassung der Funktion bzw. des Signals digital oder analog zu gestalten. Hierfür gibt es in der Elektrotechnik und Elektronik eine Vielzahl von Beispielen.

Als zu überwachende Bewegungsstrecke kann man grundsätzlich sowohl die Schließ- als auch die Öffnungsbewegung des Torblattes auswerten; manchmal wird aber ein Gefahrenzustand lediglich in der Schließstellung zu berücksichtigen sein, weshalb man die Überwachung auf diesen Bewegungsvorgang beschränken kann.

Eine hier vorgeschlagene Anlage zur Durchführung des Verfahrens weist einen Streckensignalgeber auf, der von dem Torantrieb bewegungsabhängig betätigt ist, weiterhin ist ein Funktionsspeicherbauelement zur Aufnahme der hindernisfreien, überführungsstreckenabhängigen Bewegungscharakteristik des Torblattes und ein Vergleicher vorgesehen, dem im Zuge der jeweils zu überwachenden Bewegung des Torblattes zum einen der streckenabhängige Funktionswert des mitgeführten Funktionsspeicherbauelementes und zum anderen der streckenabhängige Signalwert des vom tatsächlichen Bewegungsablauf streckenabhängigen Signals eines die tatsächliche Torblattbewegung mit vollziehenden Signalgebers zugeführt ist und dessen die Differenz zwischen dem Funktionswert und dem Signalwert wiedergebendes Ausgangssignal einem Diskriminator zugeführt ist, dessen bei Überschreiten eines bestimmten Differenzwertes auftretendes Ausgangssignal einen den Antrieb ab- oder umschaltenden Steuerschalter zugeleitet ist.

In bevorzugter Ausführung ist der die durchlaufende Überführungsstrecke abtastende Signalgeber als Analog-Digital-Wandler ausgebildet.

Das Funktionsspeicherelement kann in digitaler Form als fortschaltbarer Speicher, beispielsweise als Schieberegister, ausgebildet sein.

In anderer Ausgestaltung kann das Funktionsspeicherbauelement ein mechanisch bewegtes Speicherelement, beispielsweise ein Magnetband als Funktionsträger sein. Dieses mechanisch bewegte Speicherelement kann starr an ein bewegtes Teil des Antriebes angekoppelt sein.

Die Erfindung wird anhand der in der Zeichnung wiedergegebenen Ausführungsbeispiele nachstehend näher erläutert. Es zeigt

Fig. 1 eine schematische Ansicht eines über Kopf bewegbaren einstückigen Torblattes mit einer Blockbild-Wiedergabe einer Anlage zur Durchführung des Verfahrens,

Fig. 2 ein Diagramm eines möglichen Verlaufes der Antriebskraft über der Bewegungsstrecke des Torblattes,

Fig. 3 ein Blockschaltbild einer digital arbeitenden Auswerteschaltung,

Fig. 4 ein Beispiel eines Streckensignalgebers als Analog-Digital-Wandler,

Fig. 5 ein Blockschaltbild eines analog arbeitenden Auswertekreises.

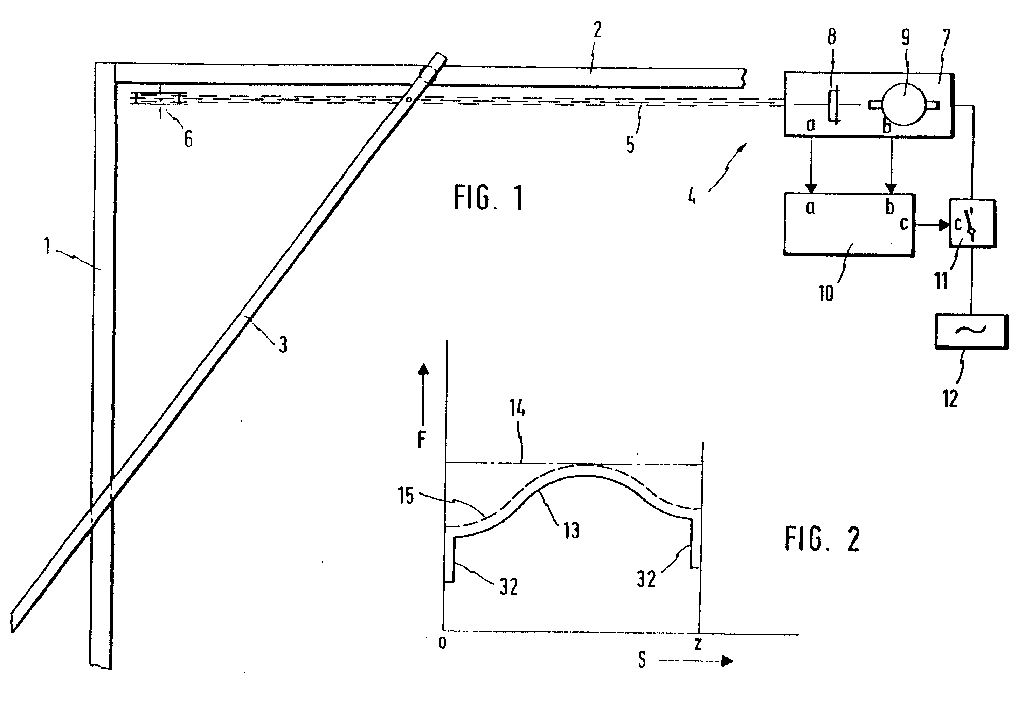

Das als Beispiel herangezogene Überkopf-Tor ist in Fig. 1 in Form einer vertikalen Zargenstrebe 1 und einer daran anschließenden horizontalen Laufschiene 2 wiedergegeben, in welch letzterer das Torblatt 3 geführt ist. Das Torblatt 3 ist im übrigen über nicht dargestellte Hebelgestänge an dem Zargenrahmen angelenkt und mit ebenfalls nicht dargestellten Ausgleichsfedern versehen, die den Verlauf der Antriebskraft über die Bewegungsstrecke hinweg ausgleichen soll. Der insgesamt mit 4 bezeichnete Torantrieb besteht aus einem Schleppkettenantrieb mit einer Schleppkette 5, die bei 6 über eine ortsfest gehaltene Umlenkrolle geführt ist und zum anderen über eine Antriebsrolle geführt ist, die in nicht näher dargestellter Weise in dem Motorantriebsaggregat 7 gelagert und über eine Kupplung 8 antreibbar ist, die auf ihrer Antriebsseite mit einem Elektromotor 9 in Verbindung steht, in der Regel über ein zwischengeschaltetes Untersetzungsgetriebe. Eine insgesamt mit 10 bezeichnete Auswerteschaltung steht über die Anschlüsse a und b mit dem Motoraggregat 7 in Verbindung und ist mit ihrem Ausgang c an einen Steuerschalter 11 angeschlossen, der den Elektromotor 9 mit dem Netzanschluß 12 verbindet. Der Steuerschalter 11 ist normalerweise geschlossen, das für die beabsichtigten Betriebsvorgänge notwendige Ein- und Ausschalten des Antriebes ist nicht weiter dargestellt.

Fig. 2 zeigt ein Diagramm der Antriebskraft F über die Bewegungsstrecke s. Trotz der vorerwähnten Ausgleichs-Federeinrichtung weisen Türen bzw. Tore der hier in Frage stehenden Art eine Bewegungscharakteristik auf, die einen ungleichmäßigen Verlauf des Bewegungswiderstandes bzw. der erforderlichen Antriebskraft über die Bewegungsstrecke hinweg zeigen. Die entsprechend dieser Bewegungscharakteristik verlaufende Kurve 13 ist — lediglich als Demonstrationsbeispiel eines möglichen Verlaufes — in dem Diagramm eingezeichnet. Die weiterhin eingezeichnete horizontale strichpunktierte Linie 14 orientiert sich in ihrer Höhe an dem Maximum der Kurve 13 zuzüglich einer Differenzkraft $\Delta F$ und gibt den Schwellwert wieder, mit welchem Unfallverhütungseinrichtungen nach dem Stande der Technik arbeiten. Man sieht, daß die Kraft, bei welcher bislang der Alarmfall signalisiert wurde, über die gesamte Bewegungsstrecke hinweg konstant verläuft. Das bedeutet aber, daß zu jedem Streckenabschnitt außerhalb des Maximums ein unnötig hoher Sicherheitsabstand gehalten wird.

Die mit gleichmäßigem Abstand über der Kurve 13 gestrichelt wiedergegebene Kurve 15 gibt demgegenüber einen Abstand $\Delta F$ wieder, der den tatsächlichen, im Normalbetrieb auftretenden Kraftbedarf entsprechend dem Verlauf der Kurve 13 berücksichtigt. Mit der Erfindung wird erreicht, daß die Abschaltschwelle sich an dem tatsächlichen Kraftbedarf entsprechend der Kurve 13 orientiert, wodurch erreicht wird, daß ein Überschreiten des Sicherheitsabstandes $\Delta F$ je nach erreichtem Streckenabschnitt entsprechend früher, d. h. bei niedrigerer Antriebskraft zur Auslösung des Alarmfalles führt. Damit ist eine erfindungsgemäße Ausbildung des Tores außerhalb des maximalen Kraftbedarfes entsprechend empfindlicher als eine Anlage nach dem Stande der Technik; die Beeinträchtigung eines Hindernisses durch das auftreffende Torblatt wird entsprechend kleiner gehalten.

Diese vorteilhafte Eigenschaft wird grundsätzlich dadurch erreicht, daß die Bewegungscharakteristik des Torblattes für den hindernisfreien Normalfall aufgenommen und gespeichert wird und für den Überwachungsfall parallel zur überwachten Bewegung des Torblattes abgefragt und mit der tatsächlich für diesen Fall auftretenden Bewegungscharakteristik verglichen wird.

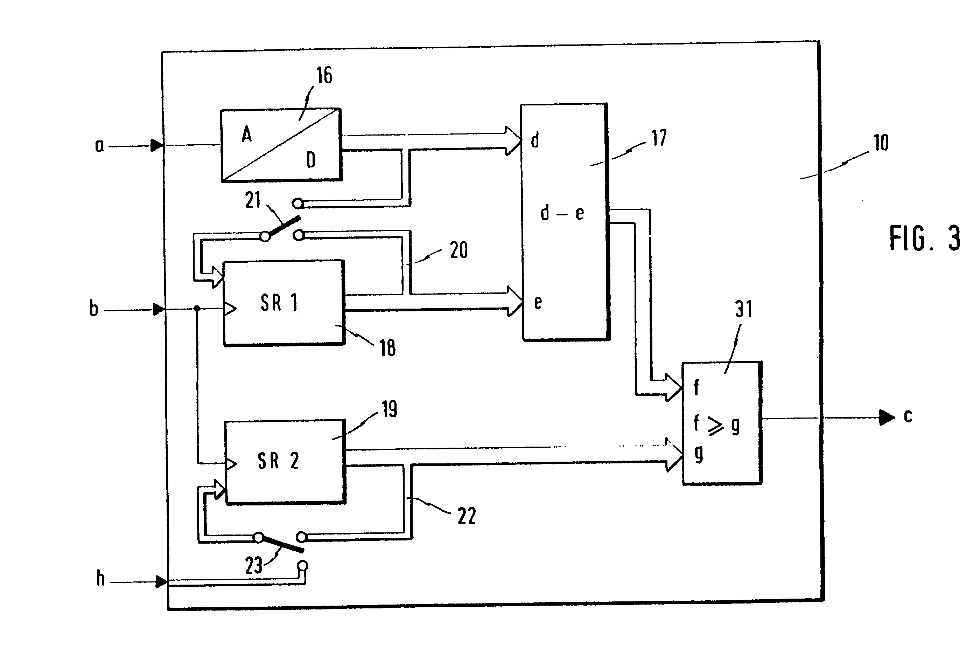

Fig. 3 zeigt ein Beispiel einer digital arbeitenden Auswerteschaltung. Über die Verbindungsleitung a wird der Auswerteschaltung 10 ein Signal zugeleitet, das die Bewegungscharakteristik des Tores in Abhängigkeit von der zurückgelegten Bewegungsstrecke wiedergibt. Dabei kann es sich um ein von der Antriebskraft, dem Drehmoment oder der Leistungsaufnahme des Antriebsmotors abgeleitetes Signal handeln. Dieses Signal erreicht in analoger Form einen Analog-Digital-Wandler 16, dessen digitaler Ausgang einer Subtraktionsschaltung 17 zugeführt ist. Über die Verbindungsleitung b wird der Auswerteschaltung 10 ein Streckensignal in Form einer Impulsreihe zugeführt, die in dieser digitalisierten Form die durchlaufende Bewegungsstrecke dem jeweils erreichten Streckenabschnitt nach wiedergibt. Dieses Streckenimpulssignal wird dem Fortschalteeingang eines Funktionsspeicherbauelementes in Form eines Schieberegisters 18 zugeführt. Der Ausgang des Schieberegisters ist einem zweiten Eingang e der Subtraktionsschaltung 17 zugeführt. Das bei b zugeführte Streckenimpulssignal wird parallel dem Fortschalteeingang eines weiteren Schieberegisters 19 zugeleitet, in welchem der Differenzwert $\Delta F$ gespeichert ist. Im Zusammenhang mit Fig. 2 wurde der Abstand zwischen der Kurve 13 und der Kurve 15 als konstantes $\Delta F$ über die Bewegungsstrecke hinweg dargestellt. Die Auswerteschaltung gemäß Fig. 3 ermöglicht durch das Schieberegister 19 aber auch die Zuordnung unterschiedlicher Werte von $\Delta F$ in Abhängigkeit von der durchlaufenden Bewegungsstrecke. Damit hat man ein weiteres Instrument in der Hand, die Empfindlichkeit der Anlage zu erhöhen bzw. örtlichen Gegebenheiten, beispielsweise Winddruck in Abhängigkeit von der Torblattstellung innerhalb der Bewegungsstrecke, zu berücksichtigen.

Vom Ausgang des Schieberegisters 18 ist eine Rückführleitung 20 über einen Umschalter 21 dem Einspeichereingang dieses Schieberegisters zugeführt, wodurch bei Ausspeichern die ausgespeicherten Werte dem Eingang wieder zugeführt werden, um so die eingespeicherte Funktion im Umlaufverfahren zu erhalten. In gleicher Weise ist der Ausgang des Schieberegisters 19 über eine Rückführleitung 22 und einen Schalter 23 dem Speichereingang des Schieberegisters 19 zugeführt. Der Schalter 21 ist in Umschaltstellung auf den Ausgang des Analog-Digital-Wandlers 16 umschaltbar, so daß die bei a zugeführten Signale der Bewegungscharakteristik, beispielsweise der Antriebskraft, in Abhängigkeit von der Bewegungsstrecke, dem Speichereingang des Schieberegisters 18 zugeführt werden kann. Damit ist die Möglichkeit gegeben, die die Bewegungscharakteristik des Tores wiedergebende Funktion nach Installation des Tores bei hindernisfreiem Normalbetrieb einzuspeichern und gegebenenfalls diese Einspeicherung bzw. Neuaufnahme der Funktion nach bestimmten Betriebsintervallen zu wiederholen.

In ähnlicher Weise ist durch Betätigen des Umschalters 23 der Speichereingang des Schieberegisters 19 auf eine Eingabeleitung h umschaltbar, um die $\Delta F$-Werte einspeichern bzw. ändern zu können. Auch hier hat man eine Möglichkeit, durch Neuaufnahme von $\Delta F$ sich ändernden Betriebsbedingungen gerecht zu werden.

Ist die Funktion für den hindernisfreien Normalbetrieb in das Schieberegister 18 eingespeichert, so wird der Schalter 21 auf die Leitung 20 geschaltet. Nunmehr ist die Anlage — bereits gespeicherte $\Delta F$-Werte vorausgesetzt — für die Überwachung der Torblattbewegung bereit.

Wird nunmehr das Torblatt bewegt, so wird die tatsächlich auftretende Betriebscharakteristik für jeden überwachten Bewegungsvorgang aufgenommen und über die Leitung a dem Analog-Digital-Wandler 16 zugeführt, der die digitalisierten Werte über den Eingang d der Subtraktionsschaltung 17 zuführt. Gleichzeitig wird das streckenabhängige Impulssignal über b dem Fortschalteeingang des Schieberegisters 18 zugeführt, das daraufhin die dem Normalbetrieb entsprechenden Funktionswerte streckenabhängig dem Eingang e der Subtraktionsschaltung 17 zuführt. Es findet somit für jeden Streckenabschnitt — der je nach Auflösungsvermögen des Streckensignalgebers aufeinanderfolgend annähernd beliebig klein gehalten werden kann — ein Vergleich der den Normalfall wiedergebenden zugehörigen Funktionswerte mit den streckenkonkludenten tatsächlich erreichten Signalwerte statt, wobei die Funktionswerte und die Signalwerte vorzugsweise — und im Falle der Aufnahme der Funktion erst nach Installation des Tores unter entsprechend geringem Aufwand — von derselben, die Betriebscharakteristik für den Normalfall und den Überwachungsfall wiedergebenden physikalischen Größe, beispielsweise der Antriebskraft, des Antriebsdrehmomentes, der Leistungsaufnahme des Antriebsmotors etc. abgeleitet werden.

Die Subtraktion der von Funktionswerte und der Signalwerte, also diejenige der an den Eingängen d und e der Subtraktionsschaltung 17 auftretenden Werte d−e wird einem Vergleicher 31 zugeführt, und zwar über einen ersten Eingang f, dessen zweitem Eingang g die streckenabhängig zugehörigen Werte für $\Delta F$ eingegeben werden. Am Ausgang der Vergleicherschaltung 31 tritt so lange kein Signal auf, wie d−e absolut kleiner ist als der streckenabhängig zugehörige Wert $\Delta F$. Überschreitet dagegen die Differenz zwischen Signalwert und Funktionswert den streckenkonkludent zugehörigen Wert für $\Delta F$, so tritt am Ausgang c der Vergleicherschaltung ein Signal auf, das die Stromzuführung zu dem Antriebsmotor 9 unterbricht. In gleicher Weise kann natürlich eine Drehrichtungsumkehr des Motors 9 auf dieses Signal hin veranlaßt werden.

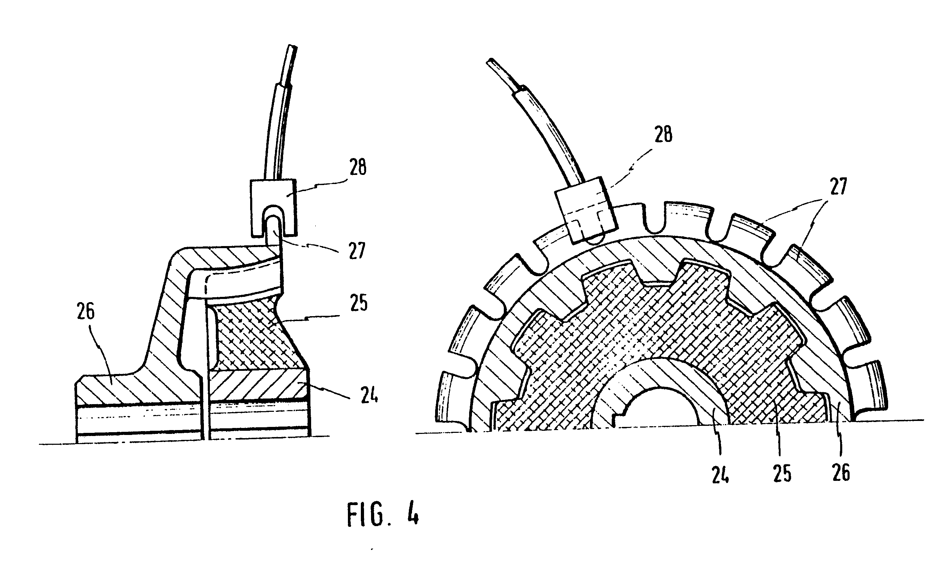

Fig. 4 zeigt eine mögliche Ausbildung eines Streckensignalgebers in Form eines Digital-Analog-Wandlers. In einem axialen Querschnitt und in einem radialen Schnitt ist eine Kupplung dargestellt, wie sie zwischen dem Antriebsrad der Schleppkette 5 und dem Ausgang eines dem Antriebsmotors 9 nachgeschalteten Untersetzungsgetriebes vorgesehen sein kann. Die angetriebene Kupplungshälfte 24 ist als drehelastisches Kupplungsglied mit einer radialen Zwischenschicht zwischen Verzahnung und Nabe, beispielsweise in Form eines Gummiringes 25 ausgebildet, die abgetriebene Kupplungshälfte 26 weist an ihrem radialen Umfang eine Verzahnung 27 auf, welche mit einer Abfühlsonde 28 zusammenarbeitet. Die Abfühlsonde 28 mißt die Veränderung der magnetischen Leitfähigkeit zwischen den aus einem ferromagnetischen Werkstoff bestehenden Zähnen und den dazwischen befindlichen Lücken der Verzahnung 27. Auf diese Weise gibt die Sonde 28 ein elektrisches Impulssignal ab, das der durch die Umdrehungsgröße der Kupplung wiedergegebenen, jeweils durchlaufenen Bewegungsstrecke des Tores entspricht.

Die Ermittlung der Bewegungscharakteristik ist — wie gesagt — durch Abfragen verschiedener Betriebsgrößen möglich, beispielsweise des Drehmomentes durch Feststellung einer Verdrehung zwischen zwei bewegten Teilen, wie sie beispielsweise die beiden vorerwähnten Kupplungsteile 24 und 26 darstellen können. Als Sensor des streckenabhängigen Drehmomentes bzw. Verdrehwinkels lassen sich unterschiedliche, bekannte Einrichtungen verwenden, beispielsweise Dehnungsmeßstreifen oder auch elektromagnetische Sonden, die Verschiebungen zwischen Geber und Nehmer auch kleineren Umfanges aufzunehmen erlauben. Eine weitere Möglichkeit, die Eingangsleistung zu überwachen, ist auf vielerlei Weise bekannt.

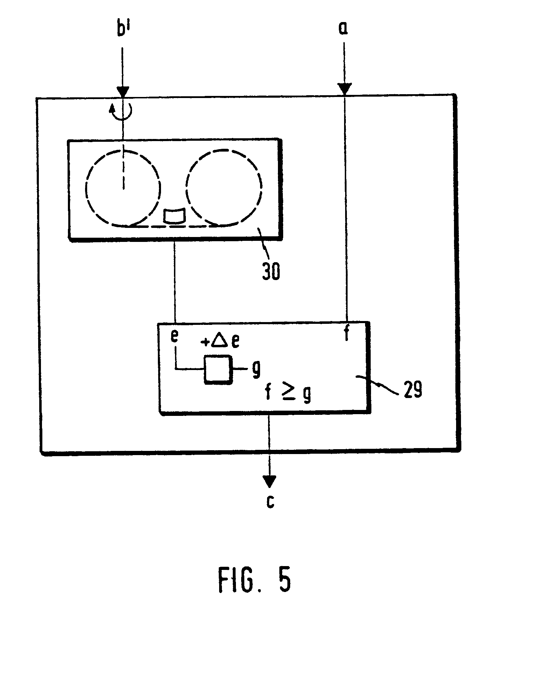

In Fig. 5 ist ein weiteres Ausführungsbeispiel der Auswerteschaltung 10 wiedergegeben, das mit analogen Signalen arbeitet. Dabei ist zunächst vorgesehen, eine vorzugebende Differenz zwischen Funktionswert und Signalwert als über den Bewegungsablauf hinweg konstante Größe $\Delta e$ den Funktionswerten zu addieren.

Über die Verbindungsleitung a wird dem Eingang f einer Vergleicherschaltung 29 das die überwachte Betriebscharakteristik wiedergebende Signal als Analog-Größe zugeführt. Ein mechanisch angetriebenes Funktionsspeicherbauelement in Form einer Tonbandkassette 30 ist über die Verbindung b' auf nicht näher dargestellte Weise und auf vielerlei Art verwirklichbar getrieblich mit dem Antrieb verbunden, derart, daß die tatsächliche Bewegungsgröße schlupffrei auf das Tonband übertragen wird. Dieses Tonband soll im vorliegenden Ausführungsbeispiel bereits die dem hindernisfreien Normalbetrieb der Torblattbewegung entsprechende Funktion enthalten. Natürlich ist es auch bei dieser Schaltung möglich, die Verbindungsleitung a zur Aufnahme der Funktion auf den Signaleingang des Tonbandes umschaltbar zu gestalten.

Am Ausgang des Tonkopfes der Kassette, der mit dem Eingang e des Vergleichers 29 verbunden ist, tritt in Abhängigkeit von der mechanisch aufgebrachten Antriebsbewegung und damit durchlaufenen Bewegungsstrecke der Funktionswert auf, der mit dem streckenkonkludenten Signalwert verglichen wird, nachdem ihm die Größe e zuaddiert wurde. Das Ergebnis dieser Addition g wird mit f verglichen, es wird am Ausgang c für den Fall ein dem Steuerschalter 11 zugeführtes Signal abgegeben, daß der Signalwert f den streckenkonkludenten Funktionswert g überschreitet.

Die vorgenannten Beispiele erschöpfen die Möglichkeiten des Aufbaus einer Anlage zur Durchführung des erfindungsgemäßen Verfahrens keinesfalls. Es lassen sich insbesondere auch Anlagen denken, bei denen die Signalwertverarbeitung bzw. -erfassung gemischt analog und digital erfolgt. Die Empfindlichkeit bei digitaler Verarbeitungsweise hängt von dem jeweils vorgesehenen Auflösungsvermögen ab und kann mit den heutigen technischen Möglichkeiten annähernd beliebig hoch getrieben werden. Im Falle digitaler Funktionsspeicherbauelemente läßt sich der Funktionswert durch Kodierung, beispielsweise Binärkodierung, auch bei hoher Auflösung mit verhältnismäßig geringem Speicheraufwand verwirklichen.

Die gespeicherte Funktion, die den störungsfreien Bewegungsablauf des Torblattes durch irgendeine entsprechende physikalische Größe wiedergibt, kann zusätzlich dazu ausgenutzt werden, zu Beginn und/oder zu Ende der Bewegungsstrecke ein Abschaltsignal für den Antrieb zur Verfügung zu stellen. Es handelt sich dabei um die Streckenabschnitte zu Beginn und Anfang der Torblattbewegung, bei welchen eine automatische Abschaltung des Antriebes wegen Erreichen der jeweiligen Endlage des Torblattes durchgeführt werden soll. Zu diesem Zwecke hat man bislang sogenannte Endschalter benutzt, die durch irgendein mechanisch mit dem Torblatt bzw. der dieses antreibenden Kette oder dergleichen mitgeführten Betätigungsglied geschaltet wurden. Wie Fig. 2 erkennen läßt, ist es lediglich erforderlich, die der Bewegungscharakteristik bei störungsfreiem Betrieb zugeordnete Funktionskurve 13 an ihrem Anfang und/ oder ihrem Ende mit einer Markierung 32 zu versehen. Diese Markierung kann einfach in einer Unterbrechung der Kurve 13 liegen. Gerät das Tor in einen solchen Endbereich der durchlaufenen Strecke, so wird die Differenz zwischen der Funktionskurve 13 und der Signalkurve 15 schlagartig größer, so daß in der vorgeschilderten Weise wegen Überschreitens des Differenzwertes der Antrieb durch den Schalter 11 abgeschaltet wird. Für den Anlauf des Motors kann eine entsprechende Überbrückung des Schalters 11 vorgesehen werden, wie dies auch bei bekannten Überwachungseinrichtungen der Fall ist.

## Patentansprüche

1. Verfahren zur Überwachung des Ablaufes der Bewegung eines antreibbaren, ein- oder mehrteiligen Tür- oder Torblattes einer Tür bzw. eines Tores, insbesondere eines Überkopf-Tores, entlang der Überführungsstrecke zwischen der Offen- und der Schließstellung und Unterbrechung dieser Bewegung, insbesondere durch Ab- oder Umschalten des Antriebes, für den Fall eines Hindernisses in der Bewegungsbahn, gegen das das Torblatt anläuft, dadurch gekennzeichnet, daß die in Abhängigkeit von der Überführungsstrecke tatsächlich auftretende Bewegungscharakteristik für jede der zyklisch aufeinanderfolgenden, überwachten Bewegungen des Torblattes fortlaufend abgetastet und das somit gewonnene Signal mit einer für jede überwachte Bewegung mitlaufend abgefragten Funktion verglichen wird, die vor Inbetriebnahme des Tores für einen hindernisfreien Normalbetrieb wenigstens erstmalig in Abhängigkeit von der zu überwachenden Bewegung des Torblattes entlang der Überführungsstrecke aufgenommen und gespeichert wurde, wobei die durch den Vergleich in Abhängigkeit von dem jeweils zurückgelegten Überführungsstreckenabschnitt ermittelte Differenz zwischen den jeweils zugehörigen Werten des Signals und der Funktion überwacht und bei Überschreiten eines vorbestimmten Differenzwertes zur Ableitung eines Unterbrechungssignals für die Unterbrechung der jeweils überwachten Bewegung des Torblattes ausgewertet wird.

2. Verfahren nach Anspruch 1, dadurch gekennzeichnet, daß der Differenzwert über die Überführungsstrecke hinweg konstant eingestellt wird.

3. Verfahren nach Anspruch 1 oder 2, dadurch gekennzeichnet, daß das Signal von denselben physikalischen Betriebsgrößen abgeleitet wird, durch deren Abfragen zuvor die gespeicherte Funktion aufgenommen wurde.

4. Verfahren nach einem der Ansprüche 1 bis 3, dadurch gekennzeichnet, daß die Funktion für den hindernisfreien Normalbetrieb nach der Installation des Tores am Einsatzort aufgenommen und gespeichert wird.

5. Verfahren nach einem der Ansprüche 1 bis 4, dadurch gekennzeichnet, daß die Funktion nach bestimmten Betriebsintervallen des Tores jeweils neu aufgenommen und gespeichert wird.

6. Verfahren nach einem der Ansprüche 1 bis 5, dadurch gekennzeichnet, daß die Funktion und/oder das Signal durch Abtasten der Antriebskraft in Abhängigkeit von der Überführungsstrecke ermittelt wird.

7. Verfahren nach Anspruch 6, dadurch gekennzeichnet, daß die Funktion und/oder das Signal durch Abtasten des Antriebsdrehmomentes in Abhängigkeit von der Überführungsstrecke ermittelt wird.

8. Verfahren nach Anspruch 7, dadurch gekennzeichnet, daß die Funktion und/oder das Signal durch Abtasten des Verdrehwinkels zwischen zwei im Zuge des Antriebskraftverlaufs hintereinander angeordneten, elastisch miteinander verkuppelten Drehelementen in Abhängigkeit von der Überführungsstrecke ermittelt wird.

9. Verfahren nach einem der Ansprüche 1 bis 5, dadurch gekennzeichnet, daß die Funktion und/oder das Signal durch Abtasten der elektrischen Antriebsleistung eines elektrischen Antriebsaggregates für das Torblatt in Abhängigkeit von dessen Überführungsstrecke ermittelt wird.

10. Verfahren nach einem der Ansprüche 1 bis 9, dadurch gekennzeichnet, daß ein die Funktion gespeichert enthaltendes Bauelement zur Wiedergabe der überführungsstreckenabhängigen Funktionswerte im Zuge der zu überwachenden Bewegung in Abhängigkeit von der tatsächlichen Torblattbewegung gesteuert wird.

11. Verfahren nach einem der Ansprüche 1 bis 9, dadurch gekennzeichnet, daß ein die Funktion gespeichert enthaltendes Bauelement zur Wiedergabe der überführungsstreckenabhängigen Funktionswerte mit Beginn der zu überwachenden Bewegung des Torblattes gestartet wird und unabhängig von dieser tatsächlichen Bewegung weiterläuft bzw. weitergeschaltet wird.

12. Verfahren nach Anspruch 11, dadurch gekennzeichnet, daß die Funktion von dem Geschwindigkeitsverlauf der normalen, hindernisfreien Bewegung des Torblattes und das Signal von dem jeweiligen tatsächlich auftretenden Geschwindigkeitsverlauf der jeweils überwachten Torblattbewegung abgeleitet werden.

13. Anlage zur Durchführung des Verfahrens nach einem der Ansprüche 1 bis 12, gekennzeichnet durch einen Streckensignalgeber (28), der von dem Torantrieb (7) bewegungsabhängig betätigt ist, durch ein Funktionsspeicherbauelement (18) zur Aufnahme der hindernisfreien, überführungsstreckenabhängigen Bewegungscharakteristik des Torblattes (3) und durch einen Differenzbildner (17), dem im Zuge der jeweils zu überwachenden Bewegung des Torblattes (3) zum einen der streckenabhängige Funktionswert des mitlaufenden Funktionsspeicherbauelementes (18) und zum anderen der streckenabhängige Signalwert des vom tatsächlichen Bewegungsablauf streckenabhängigen Signals zugeführt ist und dessen die Differenz zwischen dem Funktionswert und dem Signalwert wiedergebendes Ausgangssignal einem Vergleicher (31) zugeführt ist, dessen bei Überschreiten eines bestimmten Differenzwertes auftretendes Ausgangssignal einem den Antrieb ab- oder umschaltenden Steuerschalter (11) zugeleitet ist.

14. Anlage nach Anspruch 13, dadurch gekennzeichnet, daß der die zu durchlaufende Überführungsstrecke abtastende Signalgeber (28) ein Analog-Digital-Wandler ist.

15. Anlage nach Anspruch 14 dadurch gekennzeichnet, daß der Analog-Digital-Wandler (28) ein im Zuge der Bewegung des Torblattes (3) mitgeführtes Bauelement mit einer Sägezahnausbildung (27) oder dergleichen mit abwechselnden Zonen unterschiedlicher magnetischer Leitfähigkeit aufweist, in deren Bewegungsbahn ein auf magnetische Feldänderungen ansprechender Sensor (28) eingreifend ortsfest angeordnet ist.

16. Anlage nach Anspruch 15, dadurch gekennzeichnet, daß die Sägezahnbildung im Umfangsbereich einer vom Antrieb (7) bewegten Scheibe (26) ausgebildet ist.

17. Anlage nach Anspruch 13, dadurch gekennzeichnet, daß der Signalgeber als analog arbeitender Generator, beispielsweise elektrischer Tachogenerator mit linearem Antriebsdrehzahl-Ausgangsspannungs-Verhältnis, ausgebildet ist.

18. Anlage nach einem der Ansprüche 13 bis 17, dadurch gekennzeichnet, daß das Funktionsspeicherelement (18) wenigstens einen digitalen, fortschaltbaren Speicher aufweist.

19. Anlage nach Anspruch 18, dadurch gekennzeichnet, daß der digitale Speicher ein Schieberegister aufweist.

20. Anlage nach einem der Ansprüche 13 bis 19, dadurch gekennzeichnet, daß sowohl für die Funktion als auch für die Differenz je ein Digital-Speicher (18, 19), insbesondere in Ausbildung als Schieberegister, vorgesehen ist, deren streckenabhängigen Fortschalteingang ein von der Überführungsstrecke abhängiges Fortschaltimpulssignal zugeführt ist und deren streckenabhängigen Wertigkeitseingang die jeweils ermittelten streckenabhängigen, digitalisierten Werte der Funktion und des Signals in binär kodierter Form zugeleitet sind.

21. Anlage nach einem der Ansprüche 13 bis 17, dadurch gekennzeichnet, daß das Funktionsspeicherelement (30) ein mechanisch bewegtes Speicherelement, beispielsweise Magnetband, aufweist.

22. Anlage nach Anspruch 21, dadurch gekennzeichnet, daß die mechanische Bewegung des Speicherelementes von dem Antrieb bzw. einem im Kraftübertragungszug angetriebenen Element abgeleitet ist.

23. Anlage nach Anspruch 21, dadurch gekennzeichnet, daß der mechanische Antrieb des Speicherelementes starr an den Antrieb des Torblattes angekuppelt ist.

24. Anlage nach einem der Ansprüche 13 bis 23, dadurch gekennzeichnet, daß die in dem Funktionsspeicherbauelement (18) gespeicherte Funktion für den Normalbetrieb im Bereich ihrer dem Beginn und/oder dem Ende der Bewegungsstrecke des Torblattes zugeordneten Funktionswerte Endschalter-Markierungen (32) aufweist, deren Vergleich mit den streckenzugehörigen Signalwerten ein Abschaltsignal für den Antriebsmotor (9) ergibt.

**Claims**

1. A method of monitoring the progress of the movement of a single or multi-part door or gate leaf of a door or a gate, particularly an overhead door, which can be driven in its path between the open position and the closed position, and on interruption of this movement, particularly by switching off or switching over the drive in the event of a blockage, into which the door leaf runs, in the path of movement characterised in that the movement characteristic which actually occurs in dependence on the path is continuously sensed for each of the monitored movements of the door leaf which succeed one another cyclically; the signal thus obtained is compared with a function simultaneously interrogated for each monitored movement, which function movement to be monitored of the door leaf in its path, has been picked up and stored, before the door was taken into service, for normal operation free of obstruction at least for the first time; and the difference found, through the comparison, depending on the particular section of the path covered, between the particular associated values of the signal and of the function is monitored and on exceeding a predetermined difference value is used to derive an interruption signal for the interruption of the particular monitored movement of the door leaf.

2. A method as claimed in Claim 1, characterised in that the difference value is adjusted so as to be constant over the tranfer path.

3. A method as claimed in Claim 1 or 2, characterised in that the signal is derived from the same physical operating parameters from the interrogation of which the stored function was previously picked up.

4. A method as claimed in on of the Claims 1 to 3, characterised in that the function for normal operation free of obstruction is picked up and stored after installation of the door in the place where it is to be used.

5. A method as claimed in one of the Claims 1 to 4, characterised in that the function is picked up and stored afresh each time after certain operating periods of the door.

6. A method as claimed in one of the Claims 1 to 5, characterised in that the function and/or the signal is found by sensing the driving force in dependence of the path.

7. A method as claimed in Claim 6, characterised in that the function and/or the signal is found by scanning the driving torque in dependence on the path.

8. A method as claimed in Claim 7, characterised in that the function and/or the signal is found by scanning the angle of torque between two rotary elements resiliently coupled to one another and disposed successively in the driving force chain, in dependence on the path.

9. A method as claimed in one of the Claims 1 to 5, characterised in that the function and/or the signal is found by scanning the electrical drive power of an electrical drive unit for the door leaf, in dependence on its path.

10. A method as claimed in one of the Claims 1 to 9, characterised in that a component containing the stored function is controlled to reproduce the function values in dependence on the path in the course of the movement to be monitored, depending on the actual movement of the door leaf.

11. A method as claimed in one of the Claims 1 to 9, characterised in that a component containing the stored function is started with the beginning of the movement to be monitored of the door leaf, to reproduce the function values in dependence on the path, and continues to run or is stepped on independently of this actual movement.

12. A method as claimed in Claim 11, characterised in that the function is derived from the speed variation of the normal movement of the door leaf, free of obstruction, and the signal is derived from the actual speed variation which occurs each time in the particular monitored movement of the door leaf.

13. An installation for carrying out the method as claimed in one of the Claims 1 to 12, characterised by: a path signal transmitter (28) which is actuated by the door drive (7) in dependence on movement; a function storage component (18) to receive the movement characteristic in dependence on the path of the door leaf (3), free of obstruction, and a difference former (17) to which, in the course of the particular movement to be monitored of the door leaf (3), on the one hand the function value dependent on the path of the simultaneous function storage component (18) and on the other hand the signal value, dependent on the path, of the signal of the actual course of movement is supplied; an output signal from the former (17), representing the difference between the function value and the signal value, being supplied to a comparater (31) from which the output signal appearing when a certain difference value is exceeded is supplied to a control switch (11) switching off or switching over the drive.

14. An installation as claimed in Claim 13, characterised in that the signal transmitter (28) scanning the path, covered is an analogue-digital converter.

15. An installation as claimed in Claim 14, characterised in that the analogue-digital converter (28) comprises a component which is entrained in the course of the movement of the door leaf (3) and which has a sawtooth construction (27) or the like, with alternating zones of different magnetic permeability, and a stationary sensor (28) responding to magnetic field variations is functionally engaged in the path of movement thereof.

16. An installation as claimed in Claim 15, characterised in that the sawtooth formation is constructed in the circumferential region of a disc (26) moved by the drive (7).

17. An installation as claimed in Claim 13, characterised in that the signal transmitter is constructed in the form of a generator working in an analogue manner, for example an electrical tachogenerator with a linear driving-speed-of-rotation/output-voltage ratio.

18. An installation as claimed in one of the Claims 13 to 17, characterised in that the function storage element (18) comprises at least one stepping digital store.

19. An installation as claimed in Claim 18, characterised in that the digital store comprises a shift register.

20. An installation as claimed in one of the Claims 13 to 19, characterised in that one digital store (18, 19), particularly one constructed in the form of a shift register, is provided for the function and one for the difference, and a stepping-on pulse signal depending on the path is supplied to their path dependent stepping-on inputs, and the digitalized values, depending on the path, found in each case, of the function and of the signal are supplied in binary coded form to their valency inputs depending on distance.

21. An installation as claimed in one of the Claims 13 to 17, characterised in that the function storage element (30) comprises a mechanically moved storage element, for example a magnetic tape.

22. An installation as claimed in Claim 21, characterised in that the mechanical movement of the storage element is derived from the drive or an element driven in the power-transmission train.

23. An installation as claimed in Claim 21, characterised in that the mechanical drive of the storage element is rigidly coupled to the drive of the door leaf.

24. An installation as claimed in one of the Claims 13 to 23, characterised in that the function for normal operation stored in the function storage component (18) includes limit-switch markings (32) in the region of those function values associated with the beginning and/or the end of the path of movement of the door leaf, the comparison of which markings with the signal values associated with the path results in a signal for switching off the drive motor (9).

## Revendications

1. Procédé pour la surveillance du déroulement du mouvement d'un vantail en une seule ou en plusieurs parties d'une porte ou d'un portail, en particulier d'un portail à ouverture verticale mû par un moteur le long du trajet de translation entre la position d'ouverture et la position de fermeture et l'interruption de ce mouvement, en particulier par coupure ou commutation de l'entraînement au cas où un obstacle présent sur le trajet de déplacement du vantail heurte celui-ci, caractérisé par le fait que la caractéristique de déplacement effectivement produite en fonction du trajet de translation pour chacun des mouvements surveillés se succédant de manière cyclique, du portail est sondée et que le signal ainsi obtenu est comparé avec une fonction détectée pendant le parcours et afférente à chaque mouvement surveillé, fonction qui est saisie et mise en mémoire avant la mise en service du portail pour un service normal sans obstacle, du moins pour la première fois, compte tenu du mouvement à surveiller de ce portail le long du trajet de transfert, tandis que la différence obtenue par la comparaison en fonction du tronçon respectivement parcouru du trajet de transfert entre les valeurs respectivement afférentes au signal et à la fonction est surveillée et évaluée en cas de dépassement d'une valeur prédéterminée de cette différence afin d'en dériver un signal d'interruption destiné à interrompre le mouvement respectivement surveillé du vantail.

2. Procédé selon la revendication 1, caractérisé par le fait que la valeur de la différence est réglée de manière constante sur l'ensemble du trajet de transfert.

3. Procédé selon l'une des revendications 1 ou 2, caractérisé par le fait que le signal est dérivé des grandeurs physiques de fonctionnement qui ont précédemment servi à saisir la fonction mise en mémoire.

4. Procédé selon l'une des revendications 1 à 3, caractérisé par le fait que la fonction pour le service normal sans obstacle est saisie et mise en mémoire après l'installation du portail dans son lieu d'implantation.

5. Procédé selon l'une des revendications 1 à 4, caractérisé par le fait que la fonction est nouvellement saisie et mise en mémoire après des intervalles de fonctionnement déterminés du portail.

6. Procédé selon l'une des revendications 1 à 5, caractérisé par le fait que la fonction et/ou le signal sont obtenus par sondage de la force d'intraînement en fonction du trajet de transfert.

7. Procédé selon la revendication 6, caractérisé par le fait que la fonction et/ou le signal sont obtenus par sondage du couple moteur en fonction du trajet de transfert.

8. Procédé selon la revendication 7, caractérisé par le fait que la fonction et/ou le signal sont obtenus par sondage de l'angle de torsion entre deux éléments accouplés élastiquement, disposés l'un derrière l'autre pendant que s'exerce la force d'entraînement en fonction du trajet de transfert.

9. Procédé selon l'un des revendications 1 à 5, caractérisé par le fait que la fonction et/ou le signal sont obtenus par sondage de la puissance d'entraînement électrique d'un bloc moteur électrique pour le portail en fonction de son trajet de transfert.

10. Procédé selon l'une des revendications 1 à 9, caractérisé par le fait qu'un élément de construction contenant en mémoire la fonction est commandé pour la reproduction des valeurs fonctionnelles fonction du trajet de transfert au cours du mouvement à surveiller, en fonction du mouvement effectif du vantail.

11. Procédé selon l'une des revendications 1 à 9, caractérisé par le fait qu'un élément de construction contenant en mémoire la fonction démarre afin de reproduire les valeurs fonctionnelles fonction du trajet de transfert au début du mouvement à surveiller du vantail et que cet élément continue à fonctionner indépendamment de ce mouvement effectif.

12. Procédé selon la revendication 11, caractérisé par le fait que la fonction est dérivée de la courbe des vitesses du mouvement normal sans obstacle du vantail et que le signal est dérivé de la courbe des vitesses effectives du mouvement surveillé dudit vantail.

13. Installation pour la réalisation du procédé selon l'une des revendications 1 à 12, caractérisée par un émetteur de signaux de trajet (28) qui est actionné en fonction du mouvement par le moteur (7) du portail, par un élément (18) de mise en mémoire de la fonction pour la saisie de la caractéristique de mouvement fonction du trajet de transfert sans obstacle du vantail et par un formateur de différence (17) auquel est amenée, pendant le mouvement respectivement à surveiller du vantail (3), d'une part la valeur de la fonction dépendant du trajet de l'élément de mise en mémoire (18) et d'autre part, la valeur du signal dépendant du trajet parcouru par le mouvement effectif et dont un signal de sortie reproduisant la différence entre la valeur fonctionnelle et la valeur du signal est délivré à un comparateur (31) dont le signal de sortie se produisant lorsqu'une certaine valeur prédéterminée pour la différence est dépassée est amené à un interrupteur de commutation (11) qui déclenche on inverse le sens de rotation du moteur.

14. Installation selon la revendication 13, caractérisée par le fait que l'émetteur de signaux (28) sondant le trajet de transfert à parcourir est un convertisseur analogique numérique.

15. Installation selon la revendication 14, caractérisée par le fait que le convertisseur analogique numérique 28 présente un élément de construction entraîné pendant le mouvement du vantail (3) ayant une conformation en dents de scie (27) ou similaires à zones alternées à conductibilités électriques différentes dans le trajet de déplacement duquel est disposée de manière fixe, une cellule sensible (28) répondant aux modifications du champ magnétique.

16. Installation selon la revendication 15, caractérisée par le fait que l'élément en dents de scie a la forme d'un disque (27) actionné par le moteur (7) dans la zone périphérique.

17. Installation selon la revendication 13, caractérisée par le fait que l'émetteur de signaux est constitué sous la forme d'un générateur à fonctionnement analogique, par exemple un tachygénérateur électrique à rapport linéaire entre la vitesse de rotation du moteur et la tension de sortie.

18. Installation selon l'une des revendications 13 à 17, caractérisée par le fait que l'élément de mise en mémoire de la fonction (18) présente au moins une mémoire numérique à réenclenchement rapide.

19. Installation selon la revendication 18, caractérisée par le fait que la mémoire numérique présente un registre de décalage.

20. Installation selon l'une des revendications 13 à 19, caractérisée par le fait que tant pour la fonction que pour la différence, il est prévu respectivement une mémoire numérique (18, 19) en particulier sous la forme d'un registre de décalage, à l'entrée de laquelle est délivré un signal d'impulsion à réenclenchement rapide fonction du trajet de transfert et dont l'entrée d'évaluation fonction du trajet reçoit les valeurs respectivement calculées, fonction du trajet, numérisées de la fonction et du signal sous forme codée binaire.

21. Installation selon l'une des revendications 13 à 17, caractérisée par le fait que l'élément de mise en mémoire de la fonction (30) présente un élément de mémorisation mobile mécaniquement par exemple une bande magnétique.

22. Installation selon la revendication 21, caractérisée par le fait que le mouvement mécanique de l'élément de mémorisation est dérivé de l'entraînement à savoir d'un élément entraîné pendant la transmission énergétique.

23. Installation selon le revendication 21, caractérisée par le fait que l'entraînement mécanique de l'élément de mémorisation est accouplé de manière rigide à l'entraînement du vantail.

24. Installation selon l'une des revendications 13 à 23, caractérisée par le fait que la fonction mémorisée dans l'élément de mise en mémoire de la fonction (18) présente pour le service normal, dans la zone de ses valeurs fonctionnelles associées au commencement et/ou à la fin du trajet de déplacement du vantail des marquages (32) de fin de course dont la comparaison avec les valeurs des signaux relatifs au trajet donne un signal de déclenchement destiné au moteur d'entraînement (9).

FIG. 1

FIG. 2

0 083 947

FIG. 3

FIG. 4

FIG. 5